# EUROPEAN PATENT APPLICATION

(11) **EP 4 390 684 A1**
(43) Date of publication of application: **26.06.2024**
(21) Application number: 22215460.1
(22) Date of filing: 21.12.2022
(51) Int. Cl.: G06F 9/50, G06F 9/455

(54) **METHOD OF OPTIMIZING A RESOURCE CONSTRAINT OF A CONTAINER INSTANCE OF A CONTAINERIZED CONTROL APPLICATION**

(71) Applicant: Siemens Aktiengesellschaft, 80333 München (DE)
(72) Inventor: Knierim, Christian, 81373 München (DE)
(74) Representative: Siemens Patent Attorneys

(57) **Abstract**

A method of optimizing a resource constraint that is being imposed on a container instance (14) of a containerized control application (15) during execution thereof, the method comprising: a) measuring (S3) a response time of the containerized control application (15); b) increasing (S4) the resource constraint after said measuring (S3) of the response time; c) measuring (S5) the response time of the containerized control application (15) after said increasing (S4) of the resource constraint; e) reverting (S7) the resource constraint to its previous value, which is determined as an optimum value, when an improvement between the response times measured before and after said increasing (S4) of the resource constraint is below a first threshold value. Resources are used in a more efficient manner.

## Description

Independent of the grammatical term usage, individuals with male, female or other gender identities are included within the term.

The present invention relates to the field of industrial control systems on which control tasks relating to an industrial plant are performed by containerized control applications, and, more specifically, to a method of optimizing a resource constraint that is being imposed on a container instance of a containerized control application during execution thereof.

When a plurality of container instances of the same or different containerized control applications are running on a single industrial control device, system resources such as CPU time shares, CPU cores, RAM and swap space are shared by the plurality of container instances. In order to avoid resource conflicts, resource constraints can be used to partition the available resources and assign each container instance a fixed and constrained portion of each of the system resources.

A developer may specify a desired initial value for the resource constraint of a respective container instance. However, the required amount of resources for optimum performance is generally dependent on the load put on the container instance, which is difficult to predict for a developer.

The industrial control device may be part of an orchestrated setup. In this case, upon detecting that a given container instance experiences high load and/or runs out of resources within its resource constraint, an orchestrating device may launch further container instances of the same containerized control application on the same industrial control device or on a different industrial control device that is part of the same orchestrated setup, so as to share the load over several container instances. One example is, in the context of the Kubernetes orchestrator, is the Horizontal Pod Autoscaler available from https://kubernetes.io/de/docs/tasks/run-application/horizontal-pod-autoscale/.

On the other hand, a container runtime environment or an orchestrator may also adjust a resource constraint of a running container instance in response to a high actual resource usage within the container instance, and subject to availability of additional resources on the machine and the like. In the context of Kubernetes, one example of this technique is the Vertical Pod Autoscaler available from https://github.com/kubernetes/autoscaler/tree/master/vertical -pod-autoscoler.

It is one object of the present invention to enable more efficient resource usage on an industrial control device executing a plurality of container instances of one or more containerized control applications.

According to a first aspect, the object is solved by a method of optimizing a resource constraint that is being imposed on a container instance of a containerized control application during execution thereof comprises: a) measuring a response time of the containerized control application; b) increasing the resource constraint after said measuring of the response time; c) measuring the response time of the containerized control application after said increasing of the resource constraint; and e) reverting the resource constraint to its previous value, which is determined as an optimum value, when an improvement between the response times measured before and after said increasing of the resource constraint is below a first threshold value.

The proposed method is based on the thought that, even though the performance of a container instance experiencing high resource usage generally increases when its resource constraints are increased, there is no strict linearity. For example, a single threaded application does not benefit from assignment of an additional CPU or CPU core, and also multithread applications may only be parallelizable up to a certain degree. Yet further, scaling issues may also prevent a performance benefit or may significantly lower the performance benefit that is achievable by increasing a resource constraint.

Thus, the proposed method advantageously increases the resources constraint of the container instance permanently only if said increase advantageously results in sufficiently increased performance.

On the other hand, if no sufficient increase in performance is measured, the resource constraint is ultimately not increased (is reverted to its value before increasing). Thus, resources that would otherwise be blocked with no much use are freed up and can be allocated to another container instance where the benefit may be higher.

Thus, the proposed method enables a more efficient resource usage on an industrial control device executing a plurality of container instances of one or more containerized control applications.

In particular, the method is a computer-implemented method.

More particularly, the method may be executed by the same computerized device that executes the container instance. More particularly, the computerized device may be an industrial control device having a container runtime environment for the execution of one or more container instances, such as Docker.

Alternatively, an industrial control system may comprise an orchestrator, such as Kubernetes, and a plurality of industrial control devices each having a container runtime environment, such as Docker. In this case, the method may by executed by a component of the orchestrator or by a unit provided independently of the orchestrator and the plurality of industrial control devices.

In particular, the container instance may containerize the entire containerized control application. Alternatively, the containerized control application may be constituted by a plurality of container instances. That is, the container instance containerizes at least a portion of the code of the containerized control application.

The container instance may be an isolated runtime environment. The container instance may encapsulate the containerized control application or the portions thereof including any of its dependencies, such as system libraries, binaries, and configuration files.

In particular, the response time may be a time required by the containerized control application, at least a portion of which is containerized by the container instance, to respond, by transmitting respective outgoing communications, to one or more predefined incoming communications. The respective communications may be network packets, such as TCP/IP packets, but may also be sensor input and actor output data, or the like. The response time may be an averaged time that is averaged over a plurality of instances of transmitting the one or more predefined incoming communications to the containerized control application.

In particular, the response time may be measured by obtaining response time data from an operating system, from a containerized runtime environment, from a load balancer or from an orchestrator of an industrial control system or an individual industrial control device on which the containerized control application executes. However, alternatively, the response time may also be measured by actively executing a probe script that transmits the one or more predefined incoming communications to the containerized control application and waits for reception of the corresponding outgoing communications.

Thus, in particular, the response time is an indication of performance of the containerized control application.

For example, the resource constraint may be increased by restarting the container instance with increased resource constraints. Alternatively, increasing the resource constraint may comprise setting up new copy of the container instance, providing it with the increased resource constraint, stopping the current container instance and starting the new copy of the container instance. Further options are conceivable.

The first threshold value may be an absolute value specified, for example, in milliseconds, or may be a relative value specified, for example, in percent or per thousand. The first threshold value may be a fixed value. However, the first threshold value may also be a dynamic value that is being adjusted according to the total number of resources available on the industrial control device or the like on which the container instance is executing. For example, the more resources are still available, the lower the first threshold can be.

According to an embodiment, the container instance of the containerized control application is being executed on an industrial control device during life operation thereof, and the containerized control application is performing a control task within an industrial plant.

In particular, the control task may involve inputting sensor data from a sensor installed in the industrial plant, and may involve outputting actor data to an actor installed in the industrial plant. That is, the control task may comprise controlling the industrial plant. The control task may also perform tasks such as predictive maintenance and the like.

According to a further embodiment, the resource that is constrained by the resource constraint is one or more of random access memory, CPU time shares, CPU cores, and/or swap space.

In particular, the resource is a resource of the computing device, such as an industrial control device, on which the container instance is being executed. In particular, the resource constraint limits one or more of the amount of random access memory, the percentage of CPU time, the number of CPU cores and/or the amount of swap space that can be allocated by the containerized control application. Herein, a respective "CPU core" may be defined as one of a plurality of CPU cores of a multi-core CPU in a multicore scenario and/or or as one CPU of a plurality of CPUs in a multiprocessor scenario.

According to a further embodiment, step c) comprises dynamically increasing the resource constraint without restarting the container instance afterwards.

For example, the increased value of the resource constraint may be transmitted to the orchestrator or to the container runtime environment while the container instance is executing. Optionally, a message or the like may be transmitted to the container instance to make it aware of the fact that the resource constraint has been increased.

Thus, advantageously, the resource constraint can be increased with less overhead.

According to a further embodiment, the method further comprises d) repeating steps b) and c) while the improvement between the measured response times before and after said increasing of the resource constraint is at or above the first threshold value.

In other words, an advantageous feedback loop is disclosed in which the resource constraint is increased in steps as long as the increase provides a sufficiently large benefit in performance. Once a further increase does not provide a sufficiently large benefit in performance, the resource constraint is reverted to the last value at which a sufficiently large benefit was still achieved. In this way, an optimum value of the resource constraint for a given load situation can be reliably obtained.

According to a further embodiment, step a) comprises adjusting the resource constraint to a predetermined initial value prior to measuring the response time.

The initial value may be a lower boundary indicating the minimum resource constraint that the container instance needs so as to perform reasonably.

Thus, advantageously, the feedback loop can cover an entire range from the lower boundary for the resource constraint upwards. There can be certainty that, when running the feedback loop for a given load situation, a true or global optimum value of the resource constraint is determined.

According to a further embodiment, the method further comprises monitoring values of a number of load metrics; and performing steps a) to e) each time one of the monitored values of the number of load metrics has changed by more than a second threshold value.

Thus, the method can advantageously respond dynamically to changed load conditions and re-run the feedback loop so as to optimize the resource constraint in view of a changed load condition.

The second threshold value may be an absolute value or may be a relative value. The second threshold value may be a fixed value. However, the second threshold value may also be a dynamic value that is being adjusted according to an absolute value of the corresponding load metric.

According to a further embodiment, the number of load metrics comprises a load metric of the containerized control application.

A load metrics of the containerized control application may comprise a number of incoming network communications (a number of incoming requests) per time unit received by the container instance; a resource utilization within the container instance (such as memory usage or CPU usage within the boundaries set by the resource constraint); and the like.

According to a further embodiment, the number of load metrics comprises a load metric of the system on which the container instance is being executed.

A load metric of the system on which the container instance is being executed, such as a load metric of an industrial control device, may comprise memory usage, CPU usage, swap space usage, network traffic and the like of the system as a whole.

A load situation on the underlying system may have effects on whether or how well the container instance can make use of any additional resources allocated to it by increasing its resource constraint. Merely as one example, if increasing the resource constraint leads to the container instance generating more network traffic per time unit, but the physical network traffic bandwidth of the underlying system is already exhausted, then increasing of the resource constraint will not lead to improved performance. Not all such interdependencies are predictable.

Thus, the proposed method can advantageously optimize the resource constraint of the container instance for any arbitrary combination of load conditions that might occur within the container instance and load conditions that might occur on the system on which the container instance executes, by rererunning the feedback loop described hereinabove whenever one of said load metrics changes.

According to a further embodiment a respective one of the number of load metrics is obtained from one or more of: an orchestrator of an industrial control system in which the container instance is being executed; an operating system of an industrial control device on which the container instance is being executed; a container runtime environment of the industrial control device; a load balancer of the industrial control system or the industrial control device; and/or a load generator of a test environment in which the container instance is being executed.

That is, the load metrics may readily be available in, and may be queried from, the above-cited components of an industrial control system.

According to a further embodiment, the method further comprises: f) storing the determined optimum value of the resource constraint in a database in association with corresponding values of the number of load metrics; and in the monitoring step, when one of the monitored values of the number of load metrics has changed by more than the second threshold value and all of the monitored values of the load metrics match with an entry in the database, the resource constraint is adjusted to the optimum value stored in the database in association with the matching entry without performing any of steps a) to e).

Performing the feedback loop for resource constraint optimization according to steps a) to e) may generate a considerable load on the container instance and/or on the system on which it executes and/or may take a considerable account of time to complete.

In view of this, the results of an optimization of the resource constraint under given load conditions that has been performed according to steps a) to e) may be stored in association with said load metrics that are indicative of the load conditions. Thereby, the result of said optimization can advantageously be reused at a later time when the same load conditions occur again. The time necessary for and load generated when executing the feedback loop again is advantageously avoided.

Herein, the term "match" does not necessarily refer to an absolute match, but may also refer to a substantial match. Herein, a substantial match may be defined as follows: each current monitored value of the load metrics does to not deviate from the corresponding load metrics stored for the potentially matching entry in the database by more than a corresponding threshold value.

According to a further embodiment, the method further comprises interpolating between entries of the database to generate further entries of the database.

Each further entry of the database generated in this way may thus comprise a respective interpolated resource constraint stored in association with a corresponding interpolated number of load metrics.

The interpolating may be performed by fitting a one- or multidimensional locus to data points corresponding to the existing entries of the database and obtaining the interpolated data entries from points on the locus for which there is no entry in the database.

Said interpolating may be performed preliminarily, for example by a low-priority background task, or may be performed in response to a search in the database for specific load metrics that did not produce a match, or the like.

Thus, advantageously, the frequency of execution of the feedback loop to determine an optimized resource constraint for a specific load condition may be reduced.

According to a further embodiment, the container instance is being executed in a test environment, the available resources of which are set in accordance with available resources of an actual industrial control device; different loads of the container instance are being generated with a load generator while populating the database by performing steps a) to f) for different values of the number of load metrics; after which the containerized control application is deployed to the actual industrial control device together with the populated database for execution on the actual industrial control device to perform a control task within an industrial plant.

Accordingly, the load that is generated by running the feedback loop to determine an optimum value of the resource constraint for each load condition can be offloaded to a test environment. The feedback loop is performed in advance before actually deploying the containerized control application.

That is, when the container instance is being executed in a test environment, the steps of the proposed method, in particular steps a) to f), may also be executed in the test environment. When the containerized application is deployed to the actual industrial control system together with the populated database, the industrial may perform a stripped-down method that only complies monitoring the values of the load metrics and looking up the optimum resource constraint value in the database when one of the monitored values of the number of load metrics has changed, but that excludes performing any of steps a) to f). However, alternatively, also the industrial control system may perform steps a) to f), for example, when no match is found in the database.

In any case, the additional load of steps a) to e) put on the industrial device may be advantageously reduced by offloading execution of all or of a considerable number of runs of steps a) to f) to the test environment.

The test environment may comprise a computing device on which the steps of the proposed method as well as the container instance are being executed. The computing device may be an industrial control device with properties similar or identical to the industrial control device on which the container instance is going to be deployed. The computing device may be a simulator that simulates the industrial control device on which the container instance is going to be deployed. The computing device may also be any other computing device which imposes resource constraints such that its available resources are the same or similar to the available resources on the industrial control device on which the container instance is going to be deployed.

Any embodiment of the first aspect may be combined with any embodiment of the first aspect to obtain another embodiment of the first aspect.

In the present description, the term "a number of" may refer to a singularity (a number N=1) and/or or to a plurality (a number N>1).

According to a second aspect, the object is solved by an industrial control system comprising: an industrial control device configured to execute a number of container instances of a number of containerized control applications for performing a control task within an industrial plant while imposing a respective resource constraint on each of the container instances; and an instance optimizing unit configured to perform the method of the first aspect or one of the embodiments of the first aspect with respect to each of the container instances.

The embodiments and features described with reference to the method of the first aspect of the present invention apply mutatis mutandis to the industrial control system of the second aspect of the present invention.

The instance optimizing unit may be a unit of the industrial control device. The industrial control system may comprise one or more of the industrial control devices. Alternatively, the instance optimizing unit may be provided separately as a unit of a different computing device that is in communication with the one or more industrial control devices and, optimally, with further devices or units of the industrial control system, such as an orchestrator, a load balancer, and the like.

According to a further aspect, the object is solved by a computer program product comprising a program code for executing the above-described method for optimizing the resource constraint when run on a computing device.

The computing device may be the industrial control device, or may be a different computing device in communication with the industrial control device, such as an instance optimizing unit of an industrial control system, or the like.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
- Fig. 1: shows an industrial control device according to a first exemplary embodiment;
- Fig. 2: shows steps of a method for optimizing a resource constraint according to the first exemplary embodiment;
- Fig. 3: shows steps of a method for optimizing a resource constraint according to a second exemplary embodiment;
- Fig. 4: shows an industrial control system according to a third exemplary embodiment;
- Fig. 5: shows steps of a method for optimizing a resource constraint according to the third exemplary embodiment;
- Fig. 6: shows steps of a method for optimizing a resource constraint according to a fourth exemplary embodiment;
- Fig. 7: shows a test environment and an industrial control system according to a fifth exemplary embodiment; and
- Fig. 8: shows method steps executed by an instance optimizer of the industrial control system according to one further development of the fifth exemplary embodiment.

In the Figures, like reference numerals designate like or functionally equivalent elements, unless otherwise indicated.

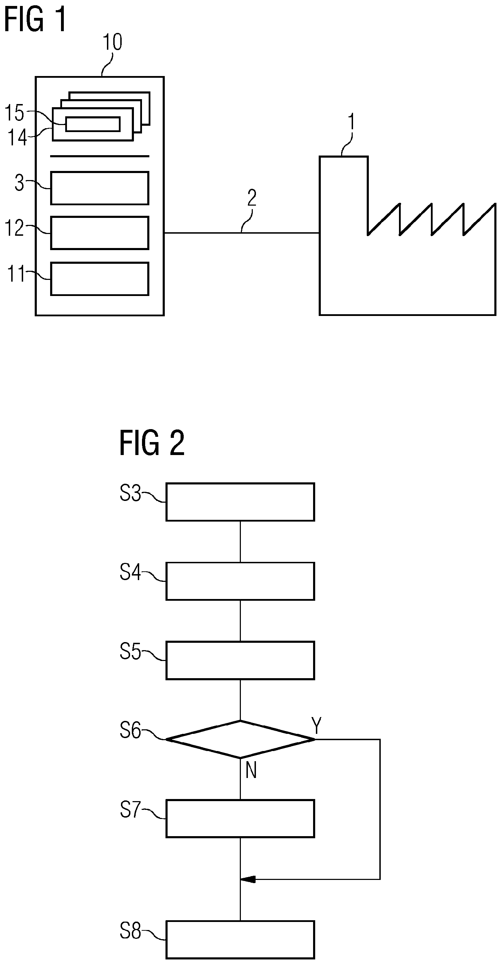

Fig. 1 shows an industrial control device 10 according to a first exemplary embodiment. The industrial control device 10 may be an industrial edge device, an embedded device, or a general purpose computer that is installed as part of an industrial control system, for example. The industrial control device 10 is connected, using a wired or wireless connection 2, with a data generating device, such as a sensor, and/or a data consuming device, such as an actor, inside an industrial plant 1. Although being shown as external to the industrial plant 1 in Fig. 1, in most typical scenarios, the industrial control device 10 is placed at a location inside the industrial plant 1, as near to the data generating devices and data consuming devices of the industrial plant 1 as possible.

As functional units, the industrial control device 10 includes an operating system 11, such as Linux or a hardened version of Linux; a container runtime environment 12, such as Docker, and one or more container instances 14 that have been deployed to the container runtime environment 12. A respective container instance 14 containerizes a respective control application 15. That is, the control application 15 is being executed inside the container instance 14 in the container runtime environment 12.

It is also conceivable that a containerized control application 15 is constituted by a plurality of respective container instances 14 containerizing respective portions of the control application 15 that are in communication with each other. However, to facilitate the description, in the following, it will be assumed that each container instance 14 containerizes exactly one entire containerized control application 15, and specific reference will be made to one container instance 14 and one control application 15 containerized thereby.

The containerized control application 15 performs a control task relating to the industrial plant 1. For example, the control application 15 may output commands, via connection 2, to the data consuming device within the industrial plant 1; may process sensors values or the like that are input via connection 2 from the data producing device within the industrial plant 1; and/or may communicate with one or more other control applications 15 that in turn communicate with the data consuming and/or data producing device in the industrial plant 1.

The container runtime environment 12 imposes one or more resource constraints on the container instance 14. Each resource constraint restricts a maximum amount of a resource, such as RAM, CPU time shares, CPU cores, or swap space, that can be allocated by the control application 15 containerized by the container instance 14. For ease of understanding, the following description is given under the assumption that a single resource constraint is imposed, but there is no limitation to this, and the description equally applies if multiple resource constraints relating to different resources are being imposed.

That is, the imposed resource constraint causes requests of the control application 15 executing inside the container instance 14 for allocation of resources such as RAM, CPU time shares, CPU cores, or swap space to fail, if the total requested amount of resources exceeds the imposed value of the respective resource constraint. An initial value of the resource constraint is specified during deployment of the container instance 14 in the container runtime environment 12. Preferably, the initial value is set to a low value that is a minimum required for core functionality of the control application 15 to work.

Furthermore, the industrial control device 10 of the first exemplary embodiment comprises an instance optimizer 3. The instance optimizer 3 is a unit that is configured to perform a method for optimizing the value of the imposed resource constraint that will be described below.

In particular, according to the first exemplary embodiment, the method for optimizing the value of the imposed resource constraint is executed in a situation in which two conditions are met: a) it is desired to increase the resource constraint, and b) additional resources are available that can be allocated to the present container instance 14.

For example, such a situation according to a) may occur when one or more of the following conditions are met: a utilization of the constrained resource within the container instance 14 is reaching the maximum utilization specified by the resource constraint; a request for more resources by the containerized application 15 inside the container instance 14 has failed due to the resource constraint having been reached; the container instance 14 is displaying poor performance; the container instance 14 is being subjected or is going to be subjected to an increased load.

If it is determined that conditions a) and b) are met, the instance optimizer 3 performs the optimizing method, the steps of which are visualized in Fig. 2. Reference is now made to Fig. 1 and Fig. 2.

In step S3, the instance optimizer 3 measures a current response time of the containerized control application 15 containerized by the container instance 14. More specifically, the response time may be acquired from the containerized control application 15 itself, from the container runtime environment 12 and/or from the operating system 11. Alternatively, step S3 may comprise running a probe script that transmits a predetermined set of incoming (from the perspective of the containerized control application 15) data transmissions to the containerized control application 15 and measures a time until a response in the form of corresponding outgoing data transmissions is received from the containerized control application 15. Such a measurement may optionally be repeated a number of times and an average response time may be determined in this way. When step S3 is completed, the method proceeds to step S4.

In step S4, the instance optimizer 3 increases the resource constraint that is being imposed on the executing container instance 14 by the container runtime environment 12 such that additional resources become available for allocation by the executing containerized control application 15. In order to apply the increased resource constraint to the container instance 14, the containerized control application 15 may be restarted (another container instance 14 thereof may be started using the increased resource constraint value, and the present container instance 14 may be stopped) to become aware of the increased resource constraint. However, preferably, the resource constraint may be increased dynamically without restarting the container instance 14 afterwards, by reconfiguring the container runtime environment 12 accordingly. In this case, optionally, a message or the like may be transmitted to the containerized control application 15 to make it become aware of the increased resource constraint.

When step S4 is completed, the method may optionally comprise pausing for a predetermined amount of time so as to allow the control application 15 do adjust its operation to the increased resource constraint. Then, the method proceeds with step S5.

In step S5, the instance optimizer 3 measures the new response time of the control application 15 in the same manner as has been described for step S3, and proceeds with step S6.

In step S6, a decision is made as to whether the response time measured in step S5 after increasing of the resource constraint constitutes a significant improvement in performance over the response time measured in step S3 before increasing the resource constraint. More specifically, it is decided whether the response time is lower after increasing the resource constraint, and if so, whether a difference between the response times measured before and after increasing the resource constraint is at or above a predetermined threshold value. The predetermined threshold value may be an absolute value or a relative value specified in relation to the time measured before increasing the resource constraint, for example. If this is the case (Y in step S6), it is decided that a significant improvement in performance has been achieved, and the method skips to step S8. If, however, the difference is below the first threshold value, or if no improvement was obtained at all (N in step S6), it is decided that the increasing of the resource constraint in step S4 did not result in a a significant improvement in response time, and the method proceeds to step S7.

In step S7, the instance optimizer 3 reverts the resource constraint to its previous value that was in place when step S3 was executed. The reverted resource constraint is applied to the executing container instance 14 in the same manner that as described in step S4 for applying the increased resource constraint.

In step S8, the now current value of the resource constraint, which is either the reverted value (if step S7 was executed) or the increased value (if step S7 was skipped) is decided to be the optimum value of the resource constraint under the presently given conditions, and the method ends.

Thus, the resource constraint is only increased permanently when increasing the resource constraint is proven, by measurement, to provide a significant improvement in response time of the containerized control application 15. Otherwise, the resource constraint is reverted after having been temporarily increased, thereby advantageously freeing up resources on the industrial control device 10 for use by other container instances 14 that may be in more dire need of said resources.

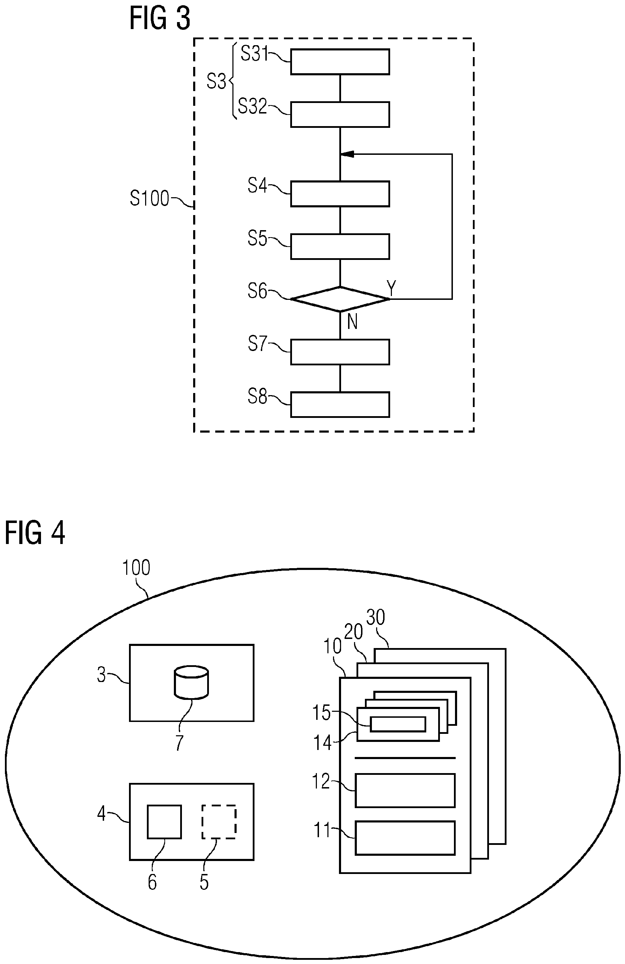

Fig. 3 shows steps of a method for optimizing a resource constraint according to a second exemplary embodiment.

The second embodiment is based on the first exemplary embodiment, and the description focusses on the differences therebetween. More particularly, the hardware structure of the second exemplary embodiment, such as the industrial control device 10 shown in Fig. 1, is the same as in the first exemplary embodiment. The optimizing method shown in Fig. 3 differs from the method shown in Fig. 2 in the following two regards; reference is made to Fig. 1 and Fig. 3:
Firstly, in the second exemplary embodiment, the initial step S3 comprises two sub-steps. In sub-step S31, the resource constraint imposed on the container instance 14 is adjusted to a predetermined initial value. The initial value of the resource constraint may be the same value that was set when the container instance 14 was initially deployed, and may be a minimum value that still allows the containerized application 15 to function properly. Then, in sub-step S32, the instance optimizer 3 measures the current response time of the containerized control application 15 when the resource constraint is the minimum value in the same manner as described for step S3 of the first exemplary embodiment with reference to the method of Fig. 2.

Steps S4, S5, S7 and S8 of the second exemplary embodiment are the same as the corresponding steps in the method of Fig. 2 of the first exemplary embodiment.

Secondly, step S6 differs from the method shown in Fig. 2 in that if a significant improvement of performance has been achieved by increasing the resource constraint in step S4 (Y in step S6), the method does not proceed to step S8, but rather branches back to step S4. That is, the resource constraint is increased again to see if a further performance improvement can be achieved. Steps S4 to S6 are thus repeated one or more times until finally no further substantial improvement of performance is achieved (N in step S6).

Only then, the method proceeds to step S7 of reverting and step S8 of determining the reverted value of the resource constraint to be the optimum value of the resource constraint.

That is, according to the second exemplary embodiment, a feedback loop is performed. The feedback food constitutes steps S3 to S8 and is designated as S100 in the figures. The feedback loop S100 starts with a low, or a lowest possible, resource constraint and increases the resource constraint repeatedly until no further improvement of response times can be achieved.

Thus, advantageously, an entire space of possible values of the resource constraint can be traversed by the feedback loop S100 to determine the optimum resource constraint under current load conditions. In particular, there may be a case in which the optimizing method of the second exemplary embodiment may end with a lower value of the resource constraint than the value that was set before the method started, thus freeing up resources that were previously allocated, but did not contribute significantly to a performance improvement.

Fig. 4 shows an industrial control system 100 according to a third exemplary embodiment.

The industrial control system 100 comprises a number of industrial control devices 10, 20, 30, each of which are connected to various data generating devices or data consuming devices in an industrial plant (1 in Fig. 1; not shown in Fig. 3). The configuration of the respective industrial control devices 10, 20, 30 is similar to the configuration of the configuration of the industrial control device 10 of the first exemplary embodiment in that each of the industrial control devices 10, 20, 30 comprises a respective operating system 11, a respective container runtime environment 12 and a number of container instances 14 containerizing respective control applications 15.

However, in the second exemplary embodiment, the respective industrial control devices 10, 20, 30 do not comprise an instance optimizer 3. Rather, a single instance optimizer 3 is provided as a separate unit separate from each of the industrial control devices 10, 20, 30. Also, the instance optimizer 3 of the second exemplary embodiment comprises a database 7 to be described in detail later.

Furthermore, the industrial control system 100 comprises an orchestrator 4. The orchestrator enables to operate the plurality of industrial control devices 10, 20, 30 as a cluster that can be operated centrally via the orchestrator. For example, the orchestrator provides a centralized interface for deployment, configuration, management and the like of a plurality of containerized control applications 15 on the industrial control devices 10, 20, 30, of the cluster. Kubernetes is one example of an orchestrator.

Optionally, a load balancer 5 may be provided within the industrial control system 100, and more particularly, as a component of the orchestrator 4. The load balancer 5 provides for load balancing of ingress network communications between a plurality of instances of a same containerized control application 15.

Further, the orchestrator 4 comprises a metric server 6. The metric server 6 collects load metrics indicative of load conditions of the respective containerized control application 15, and load metrics indicative of load conditions of the industrial control device 10 on which the container instance 14 of the containerized control application 15 is deployed.

For example, a load metric indicative of a load condition of the containerized control application 15 is a load metric that is indicative of an amount of ingress network communications (also called "requests") destined to the containerized control application 15 per time unit (i.e., a request rate). The metric server 6 may acquire the request rate from the load balancer 5. Alternatively, or additionally, the metric server 6 may acquire the request rate from the containerized control application 15, from the container runtime environment 12 and/or from the operating system 11. Still further, it is conceivable to use a load generator (not shown here) to artificially generate load for the purpose of running the optimizing method, and storing the determined optimized values of the resource constraint in the database 7. In this case, the request rate may be acquired from the load generator.

For example, a load metric indicative of a load condition of the industrial control device 10 is a load metric that is indicative of a total load of the industrial control system 10, of an amount of open network connections on the industrial control system 10, of an amount of open network connections having the containerized control application 15 as one communication partner, a total RAM usage on the industrial control device 10, and the like.

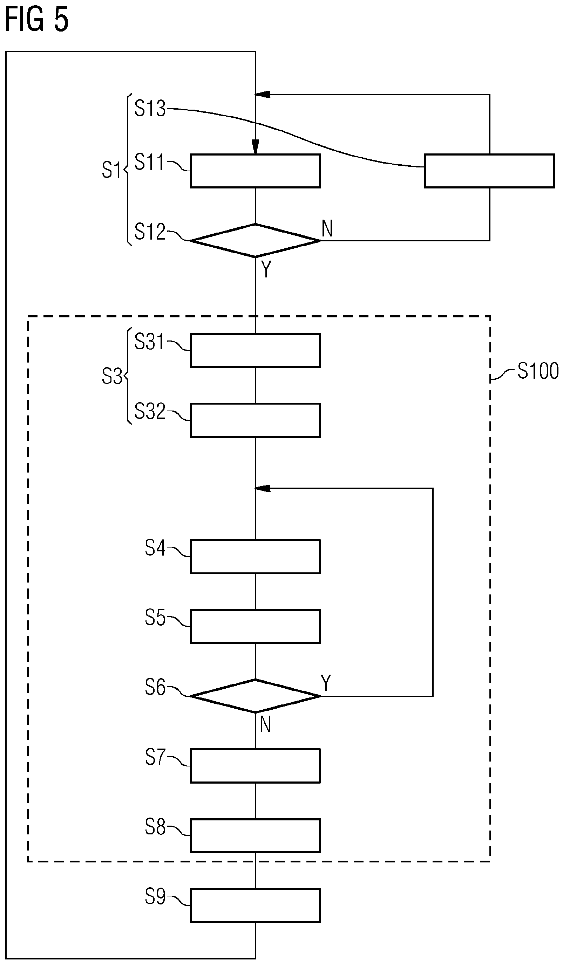

The load metrics collected by the metric server 6 will be used by the optimizing method described hereinbelow. That is, the instance optimizer 3 of the third exemplary embodiment performs a resource constraint optimizing method, the steps of which are visualized in Fig. 5.

Fig. 5 shows steps of a method for optimizing a resource constraint according to the third exemplary embodiment. Reference is now made to Fig. 4 and Fig. 5.

The method of the third exemplary embodiment comprises, at its core, the feedback loop S100 comprising steps S3, S4, S5, S5, S7 and S8 that was discussed with regards to Fig. 3 and the method of the second exemplary embodiment. Description thereof will not be repeated.

However, whereas the method of the second exemplary embodiment was executed once when specific conditions a) and b) occur, the method of the third exemplary embodiment is a method that is being executed, by the instance optimizer 3, in a continuous outer loop for each of the container instances 14. More specifically, the method of the third exemplary embodiment is based on the thought that a container instance 14 subjected to a high load (i.e. handling a high request rate) will tendentially benefit more performance-wise from additional resources being allocated. That is, higher loads handled by the containerized control application 15 containerized by the container instance 14 should correlate with higher optimum resource constraints. On the other hand, if there is already a high load on the industrial control device 10, increasing the resource constraint of a specific container instance 14 thereof may not have a positive effect on performance of the containerized control application 15, and may, to the contrary, cause resource starvation and degraded performance for other containerized control applications 15 being executed on the same industrial control device 10. Therefore, the optimum value of the resource constraint is thought to depend on a load condition of the container instance 14 and of a load condition of the industrial control device 10 on which container instance 14 executes.

Thus, in step S1, the instance optimizer 3 monitors values of a number of the load metrics available from the metrics server 6 and performs steps S3 to S8 each time one of the monitored values of the load metrics has changed by more than a second threshold value.

More specifically, immediately before, during or immediately after a given run of the feedback loop S100, current values of load metrics are acquired from the metrics server 6 and are temporarily stored by the instance optimizer 3 to become temporarily stored values of the load metrics.

In sub-step S11 of step S1, current values of the number of load metrics are acquired from the metrics server.

In sub-step S12, the current acquired values of the load metrics are compared with the temporarily stored values that were temporarily stored during the last run of the feedback loop.

If none of the current acquired values of the load metrics differ from the temporarily stored values from the last run of the feedback loop by more than a second threshold value (N in S12), the load metrics are determined not to have changed substantially, and the method proceeds to sub-step S13.

Sub-step S13 introduces a delay. The instance optimizer 3 may wait for a delay timer to expire, or may set a timer interrupt and may sleep until woken up by the timer interrupt occurring, or the like. After said delay, the method returns to sub-step S11.

If, however, in sub-step S12, at least one of the current acquired values of the load metrics differs from the temporarily stored values from the last run of the feedback loop by more than the second threshold value (Y in S12), the feedback loop S100 is executed, again, i.e., the method proceeds with step S3 (sub-step S31).

In this way, the feedback loop S100 is repeated and a new optimum value of the resource constraint is determined whenever at least one load metrics has changed substantially.

In this way, advantageously, the resource constraint can be re-optimized every time a load condition changes.

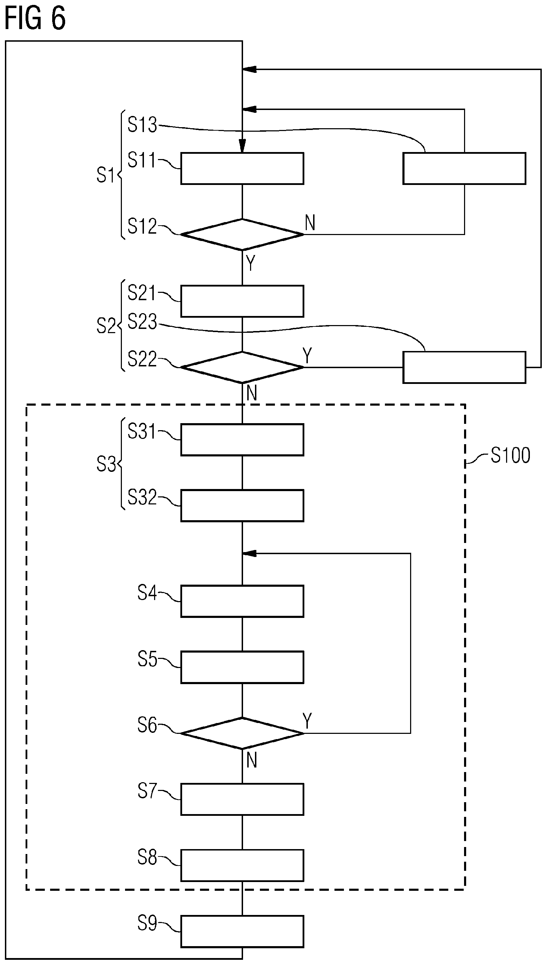

Fig. 6 shows steps of a method for optimizing a resource constraint according to a fourth exemplary embodiment. The fourth exemplary embodiment is based on the third exemplary embodiment and the description focusses on the differences therebetween. More particularly, the hardware structure of the fourth exemplary embodiment, such as the industrial control system 100 shown in Fig. 4, is the same as in the third exemplary embodiment. The optimizing method illustrated in Fig. 6 differs from the optimizing method illustrated in Fig. 5 in the following two aspects; reference is made to Fig. 4 and Fig. 6:
Firstly, after a respective execution of the feedback loop S100 is ended, and before returning to the initial monitoring step S1, the method performs step S9.

In step S9, the optimum value of the resource constraint determined by the feedback loop S100 in step S8, and the values of the number of load metrics that prevailed during execution of the feedback loop S100, as acquired from the metrics server 6 immediately before, during and/or immediately after execution of the feedback loop S100, are stored in the database 7 in association with each other for later retrieval.

It is noted that optimally and preferably, the instance optimizer 3 may not simply acquire the load metrics that prevailed during execution of the feedback loop S100 only once before, during or after execution of the feedback, but may acquire the load metrics continuously from the metrics server 6, and may ensure that the values of the load metrics remain constant, or do not deviate by more than a certain degree, throughout the entire execution of feedback loop S100. That is, if, during execution of the feedback loop S100, at least one of the load metrics deviates too much from a load metric acquired immediately before execution of the feedback loop S100, execution of the feedback loop may be paused. If a timeout occurs during pausing of the feedback loop S100, the feedback loop S100 may be aborted and the method may return to step S1 without storing anything in the database 7.

Secondly, corresponding to the storing step S9, a retrieval step S2 is performed after monitoring step S1 and before entering the feedback loop S100.

That is, when the monitoring step S1 has determined that the load metrics have changed (Y in sub-step S12), the method proceeds with step S2.

In sub-step S21 of step S2, the instance optimizer 3 looks up the currently acquired values of the load metrics in the database 7 to find a matching entry comprising similar values of the load metrics. Herein, "similar values" may refer to values in the matching entry that each do not deviate from the currently acquired values by more than a predetermined relative or absolute threshold.

In sub-step S21, a determination is made whether a matching entry is found. If a matching entry is found (Y in sub-step S22), the method proceeds with sub-step S23.

In sub-step S23, the instance optimizer 3 retrieves the optimum value of the resource constraint stored in association with the matching values of the load metrics from the database 7 and applies the retrieved optimum value of the resource constraint. That is, the retrieved optimum value is applied without the feedback loop S100 having to be performed again.

In the fourth exemplary embodiment, the feedback loop S100 is executed only if no matching values of the load metrics are found in the database 7 (N in S22).

In this way, advantageously, the feedback loop S100 does not need to be executed again when load metrics are encountered that match with load metrics for which previously an optimization has already performed. Thus, an additional load incurred by having to run the feedback loop S100 during life operation of the industrial control system 100 can advantageously be reduced as much as possible.

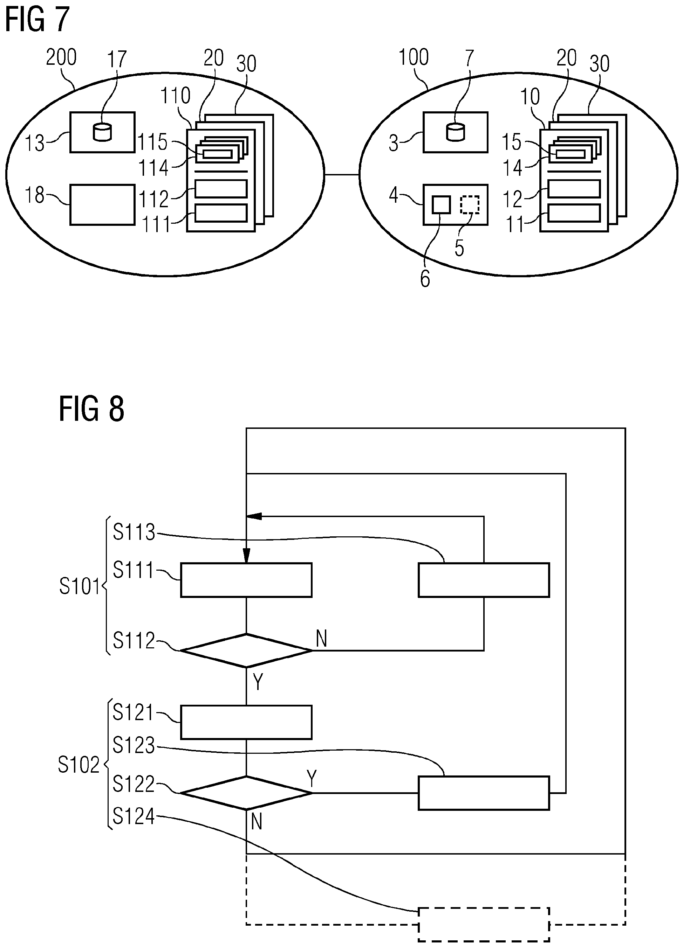

Fig. 7 shows a test environment 200 and an industrial control system according to a fifth exemplary embodiment 100.

The fifth exemplary embodiment is based on the fourth exemplary embodiment and the description focusses on the differences therebetween. Like elements are designated with like reference numerals and their description will not be repeated.

The industrial control system 100 of the fifth exemplary embodiment has the same structure as the industrial control system 100 of the fourth exemplary embodiment. Also, the instance optimizer 3 of the fifth exemplary embodiment is configured to carry out the optimization method disclosed for the fourth exemplary embodiment with reference to Fig. 6 during life operation of the industrial control system 100.

The test environment 200 may be part of a CI/CD pipeline (continuous integration/continuous delivery pipeline) that is used to develop, compile, build and finalize a containerized control application 115 for deployment in the industrial control system 100. As one of the last steps in the CI/CD pipeline, the container instance 114 to be deployed, which is containerizing the containerized control application 115 to be deployed, is deployed, for testing purposes, to a test computing device 110 of the test environment 200.

The test computing device 110 comprises an operating system 111 and a container runtime environment 112, on which the container instance 114 to be deployed is deployed for testing purposes. The resources, such as CPU time shares, CPU cores, RAM and/or swap space, that are available on the testing computing device 110 are the same, or are restricted by policies or constraints to be the same, as the resources that will be available on the industrial control device 10.

The test environment 200 comprises an instance optimizer 13 having a database 17. The instance optimizer 13 is configured to also perform the optimizing method of the fourth exemplary embodiment (Fig. 6), however, not with the industrial control device 10, 11, 12, but rather with the test computing device 110, the container instance 114 to be deployed, and the container runtime instance 112 of the test computing device 110.

Herein, the testing device 110 is not part of a life-operating industrial control system 100 in which load would occur naturally. Therefore, while performing the optimizing method of Fig. 5 in the test environment 200 by the load optimizer 13, different load conditions are artificially generated using a load generator 18. Therein, typical load scenarios as they are expected to occur in the industrial control system 100 are realized, and for each combination of values of the load metrics generated artificially in this way, the feedback control loop S100 is executed once, and the optimum resource constrained determined for the respective load situation is written to the database 17 in association with the artificially generated values of the load metrics.

When the container instance 114 to be deployed is actually deployed to the industrial control system 100 to become the container instance 14, the contents of the database 17 of the instance optimizer 13 of the test environment 200 are transmitted to the industrial control system 100 and are integrated into the database 7 of the instance optimizer 3 of the industrial control system 100.

After deployment, the instance optimizer 3 of the industrial control system 100 performs the resource constraint optimizing method of Fig. 6 with regards to the industrial control devices 10, 20, 30 and their respective container instances 14.

With the configuration of the fifth exemplary embodiment, the task of populating the database 17 by performing the feedback loop S100 for different load scenarios is largely offloaded to the test environment 200. That is, during deployment of the container instance 14, the instance optimizer 3 of the industrial control system 100 is provided with a prepopulated database 17 comprising entries load metrics are stored in association with optimum values for the resource constraint that were determined in the test environment 200. Thereby, advantageously, a frequency with which the instance optimizer 3 of the life-operating industrial control system 100 needs to run the feedback loop S100 due to no match having been found between changed load metrics and entries of the database 7 in step S2 is reduced.

Fig. 8 shows method steps executed by an instance optimizer 3 of the industrial control system 100 according to one further development of the fifth exemplary embodiment. Reference is made to Fig. 6 to Fig. 8.

According to the further development, the feedback loop S100 comprising steps S3 to S8 is never performed by the instance optimizer 3 of the live industrial control system 100. That is, according to the further development, the feedback loop 5100 comprising steps S3 to S8 is only ever performed by the instance optimizer 13 of the test environment 200.

Instead of the feedback loop S100, the instance optimizer 3 of the industrial control system 100 performs a resource constraint setting method visualized in Fig. 8. Reference is made to Fig. 7 and Fig. 8. The load metric monitoring step S101 with its sub-steps S111, S112, S113 is the same as the load metric monitoring step S1 with its sub-steps S11, S12, S13 of the method visualized in Fig. 6. Furthermore, sub-steps S121, S122 and S123 of the database retrieval step S102 also are the same as sub-steps S21, S22 and S23 of the optimizing method visualized in Fig. 6.

However, when no load metrics matching the currently acquired values of the load metrics are found in the database 7, the resource constraint setting method of Fig. 8 does not proceed with a feedback loop.

Rather in this case, two variants are conceivable: The method can simply do nothing, and return to the monitoring step Sill to wait until load metrics are detected for which the database 7 contains a matching entry.

Alternatively, the method can perform optional interpolating sub-step S124. In optional sub-step S124, the instance optimizer 3 interpolates between two or more relatively nearest entries of the database 7 in order to generate, through interpolation, a new entry in the database 7 with interpolated values of the load metrics that match the currently acquired values of the load metrics, and a corresponding interpolated optimum resource constraint associated therewith. The interpolated optimum resource constraint is then applied to the container instance 14. Then, the method returns to the monitoring step 5111.

According to the present further development, the feedback loop of the optimizing method is not performed on the industrial control system 100, but is completely offloaded to the test environment 200 of the CI/CD chain. In this way, the proposed optimizing method can advantageously be used with an industrial control device 10 that has limited resources and where performing the feedback loop S100 would cause an undue load peak.

Although the present invention has been described in accordance with preferred embodiments, it is obvious for the person skilled in the art that modifications are possible in all embodiments.

The resource constraint optimizing methods of Fig. 2 and Fig. 3 have been described with the hardware structure (singular industrial control device 10 with a singular container execution environment 12) of the first exemplary embodiment. The optimizing methods Fig. 5, Fig. 6, and Fig. 8. have been described with the hardware structure (industrial control system comprising a plurality of industrial control devices 10, 20, 30 and an orchestrator 4) of the third exemplary embodiment. However, the skilled person will appreciate that the methods of Fig. 2 and Fig. 3 may also be used with the industrial control system 100 of the third and fourth exemplary embodiments, and the methods of Fig. 5, Fig. 6 and Fig. 8 can also be performed with the hardware structure comprising a single industrial control device 10 of the first and second exemplary embodiments.

## Claims

1. A method of optimizing a resource constraint that is being imposed on a container instance (14) of a containerized control application (15) during execution thereof, the method comprising:
a) measuring (S3) a response time of the containerized control application (15);
b) increasing (S4) the resource constraint after said measuring (S3) of the response time;
c) measuring (S5) the response time of the containerized control application (15) after said increasing (S4) of the resource constraint;
e) reverting (S7) the resource constraint to its previous value, which is determined as an optimum value, when an improvement between the response times measured before and after said increasing (S4) of the resource constraint is below a first threshold value.

2. The method of claim 1,
wherein the container instance (14) of the containerized control application (15) is being executed on an industrial control device (10) during life operation thereof, and
the containerized control application (15) is performing a control task within an industrial plant (1).

3. The method of any one of claims 1 or 2,
wherein the resource that is constrained by the resource constraint is one or more of random access memory, CPU time shares, CPU cores, and swap space.

4. The method of any one of claims 1 to 3,
wherein step c) (S5) comprises dynamically increasing the resource constraint without restarting the container instance (14) afterwards.

5. The method of any one of claims 1 to 4,
further comprising:
d) repeating (S6) steps b) (S4) and c) (S5) while the improvement between the measured response times before and after said increasing (S4) of the resource constraint is at or above the first threshold value.

6. The method of claim 5,
wherein step a) (S3) comprises adjusting (S31) the resource constraint to a predetermined initial value prior to measuring (S32) the response time.

7. The method of claim 6,
further comprising:
monitoring (S1) values of a number of load metrics; and
performing steps a) to e) (S3-S8) each time one of the monitored values of the number of load metrics has changed by more than a second threshold value.

8. The method of claim 7,
wherein the number of load metrics comprises a load metric of the containerized control application (15).

9. The method of claim 7 or 8,
wherein the number of load metrics comprises a load metric of the system (10, 20, 30, 100) on which the container instance (14) is being executed.

10. The method of one of claim 7 to 9,
wherein a respective one of the number of load metrics is obtained from one or more of:
- an orchestrator (4) of an industrial control system (100) in which the container instance (14) is being executed;
- an operating system (12) of an industrial control device (10, 20, 30) on which the container instance (14) is being executed;
- a container runtime environment (12) of the industrial control device (10, 20, 30);
- a load balancer (5) of the industrial control system (100) or the industrial control device (10); and/or
- a load generator (18) of a test environment (200) in which the container instance (14) is being executed.

11. The method of any one of claims 7 to 10,
wherein the method further comprises:
f) storing (S9) the determined optimum value of the resource constraint in a database (7, 17) in association with corresponding values of the number of load metrics; and
in the monitoring (S1) step, when one of the monitored values of the number of load metrics has changed by more than the second threshold value and all of the monitored values of the load metrics match with an entry in the database (7, 17), the resource constraint is adjusted (S2) to the optimum value stored in the database (7, 17) in association with the matching entry without performing any of steps a) to e) (S3-S8).

12. The method of claim 11,
further comprising:
interpolating (S24) between entries of the database (7, 17) to generate further entries of the database (7, 17).

13. The method of any one of claims 11 or 12,
wherein the container instance (14) is being executed in a test environment (200), the available resources of which are set in accordance with available resources of an actual industrial control device (10),
different loads of the container instance (14) are being generated with a load generator (18) while populating the database (17) by performing steps a) to f) for different values of the number of load metrics, after which
the containerized control application (115) is deployed to the actual industrial control device (10) together with the populated database (17) for execution on the actual industrial control device (10) to perform a control task within an industrial plant (1).

14. An industrial control system (100) comprising:
an industrial control device (10, 20, 30) configured to execute a number of container instances (14) of a number of containerized control applications (15) for performing a control task within an industrial plant (1) while imposing a respective resource constraint on each of the container instances (14), and
an instance optimizing unit (3) configured to perform the method of one of claims 1 to 12 with respect to each of the container instances (14).

15. A computer program product comprising a program code for executing the method of one of claims 1 to 12 when run on a computing device (10, 3, 13).
